# EUROPEAN PATENT SPECIFICATION

(11) **EP 2 948 357 B1**
(45) Date of publication and mention of the grant of the patent: **10.05.2017**
(21) Application number: 14700583.9
(22) Date of filing: 10.01.2014
(51) Int. Cl.: B60W 10/08, G06F 17/00, B60W 20/11, B60W 50/00, G01C 21/34

(54) **PREDICTING AN ENERGY CONSUMPTION OF A VEHICLE**
VORHERSAGE DES ENERGIEVERBRAUCHS EINES FAHRZEUGS
PRÉVISION DE CONSOMMATION D'ÉNERGIE D'UN VÉHICULE

(30) Priority: 25.01.2013 US 201313749787
(43) Date of publication of application: 02.12.2015
(73) Proprietor: Volkswagen Aktiengesellschaft, 38440 Wolfsburg (DE); Audi AG, 85045 Ingolstadt (DE)
(72) Inventor: SELLSCHOPP, Stefan, 85221 Dachau (DE)
(86) International application number: PCT/EP2014/050394
(87) International publication number: WO 2014/114507

(56) References cited:
- DE-A1-102006 034 408
- DE-A1-102008 025 852
- DE-A1-102010 054 077
- DE-A1-102011 007 132
- US-A1- 2010 138 142

## Description

### BACKGROUND OF THE INVENTION

The present invention relates to a method for a vehicle, especially to a method for predicting an energy consumption of the vehicle. The present invention relates furthermore to a method for a vehicle for calculating a remaining driving range of the vehicle. The present invention relates furthermore to a vehicle and a server implementing the method, and especially to electrical vehicles. DE 10 2008 025852 A1 discloses a method for a vehicle, comprising:
- measuring at least one energy consumption of at least one vehicle driving along a road section, and
- predicting an energy consumption of the vehicle required for driving along the road section based on the at least one measured energy consumption of the at least one vehicle.

### BRIEF SUMMARY OF THE INVENTION

According to an embodiment, a method for a vehicle is provided. According to the method, at least one energy consumption of at least one other vehicle which drives along a road section is measured. An energy consumption of the vehicle required for driving along the road section is predicted based on the at least on energy consumption of the at least one other vehicle.

According to another embodiment, a further method for a vehicle is provided. According to this method, road sections of a planned route along which a driver of the vehicle is planning to drive are determined. For each road section, at least one energy consumption of at least one other vehicle, which drives along the road, is measured and the energy consumption of the vehicle, which is required for driving along the road section, is predicted based on the at least on energy consumption. A current energy available in the vehicle is determined and based on the current available energy and the predicted energy consumptions for the route sections of the planned route a remaining driving range is calculated.

According to a further embodiment, a vehicle comprising a transmission unit and a processing unit is provided. The transmission unit is configured to communicate with a server which is located outside the vehicle. The processing unit is configured to retrieve a predicted energy consumption from the server. The predicted energy consumption relates to an energy consumption required for driving along a road section. The predicted energy consumption is predicted based on at least one energy consumption measured by at least one other vehicle which is driving along the road section.

According to another embodiment, a server comprising a transmission unit and a processing unit is provided. The transmission unit is configured to communicate with at least one first vehicle and a second vehicle. The processing unit is configured to receive from the at least one first vehicle at least one measured energy consumption which indicates an energy consumed by the first vehicle for driving along the road section. Based on the at least one measured energy consumption, an energy consumption of the second vehicle required for driving along the road section is predicted by the processing unit. The predicted energy consumption is provided by the processing unit and the transmission unit to the second vehicle.

Although specific features described in the above summary and the following detailed description are described in connection with specific embodiments, it is to be understood that the features of the embodiments described can be combined with each other unless specifically noted otherwise.

### BRIEF DESCRIPTION OF THE SEVERAL VIEWS OF THE DRAWINGS

Hereinafter, exemplary embodiments of the invention will be described with reference to the accompanying drawings.
Fig. 1 shows changes of an estimated remaining driving range of a vehicle during driving and charging.
Fig. 2 shows schematically a vehicle and a server according to embodiments of the present invention.
Fig. 3 shows schematically a vehicle according to an embodiment of the present invention.
Fig. 4 shows method steps of a method according to an embodiment of the present invention.

### DETAILED DESCRIPTION OF THE INVENTION

In the following, exemplary embodiments of the invention will be described in more detail. It is to be understood that the following description is given only for the purpose of illustrating the principles of the invention and is not to be taken in a limiting sense. Rather, the scope of the invention is defined only by the appended claims and is not intended to be limited by the exemplary embodiments hereinafter.

It is to be understood that in the following detailed description of the various embodiments, any direct connection or coupling between functional blocks, devices, components or other physical or functional units shown in the drawings or described herein could also be implemented in an indirect connection or coupling. Same reference signs in the various instances of the drawings refer to similar or identical components. It is furthermore to be understood that the features of the various exemplary embodiments described herein may be combined unless specifically noted otherwise.

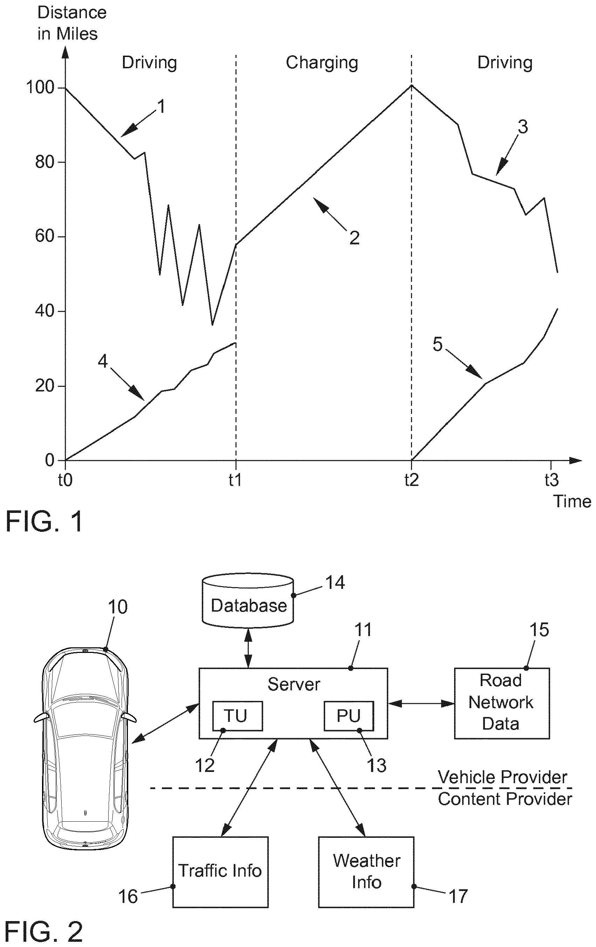

Currently, electrical vehicles comprising for example an electrical engine and a battery, provide shorter driving ranges than vehicles comprising a combustion engine. Furthermore, charging the battery of the electrical vehicle may require more time than refueling a combustion engine vehicle. Therefore, an output to a driver of an electrical vehicle indicating a remaining driving range of the vehicle is crucial. However, the remaining driving range of an electrical vehicle may be influenced significantly by for example the elevation profile, the speed travelled, and other parameters which are not transparent to the driver. Therefore, the driver may not trust the remaining driving range indications. Fig. 1 shows an exemplary output of a remaining driving range of an electrical vehicle. Graphs 1, 2 and 3 indicate the remaining driving range output to the driver over time. The graphs 4 and 5 indicate the distance driven by the vehicle over time. Starting at time t₀, the driver is driving a route or road section going up- and downhill. Therefore, although the amount of driven kilometers indicated by graph 4 increases essentially continuously, the output of the remaining driving range as indicated by graph 1 varies significantly. This may confuse the driver. At time t₁, the vehicle is recharged and the remaining driving range increases continuously as indicated by graph 2. The driver continues driving at time t₂. Again, as indicated by graph 3, the remaining driving range varies significantly and increases and decreases although the distance driven since the last charging of the vehicle increases continuously as indicated by graph 5.

The remaining driving range indication described above in connection with Fig. 1 may be estimated as in combustion engine vehicles. First, it is determined how much fuel or energy is used right now and based on this and the remaining fuel in the tank or energy in the battery it is determined how far the vehicle is able to go assuming that the energy consumption continues like this. Especially in hilly areas or along road sections where continuous driving is not possible, the estimation of the remaining driving range varies as indicated in Fig. 1, which makes the driver of the vehicle not to trust the indicated remaining driving range.

Therefore, according to a method for a vehicle according to an embodiment of the present invention, at least one energy consumption of at least one other vehicle driving along a road section is measured and based on the at least one measured energy consumption of the at least one other vehicle an energy consumption of the vehicle required for driving along the road section is predicted. Furthermore, a current state of operation of the vehicle may be determined. The current state of operation may comprise for example a required cabin temperature, the weight of the vehicle, and a driving style of the driver like sportive or energy-conserving. Predicting the energy consumption of the vehicle may be performed furthermore based on this current state of operation. Furthermore, a road section information associated with structural properties of the road section may be determined. The road section information may comprise for example if the road section is part of a city or a highway, or if it is a winding or hilly road. Furthermore, the road section information may comprise a kind of road surface, for example if it is a paved road or a gravel road. Additionally, environmental conditions along the road section may be determined. The environmental condition may be associated with current weather conditions or traffic conditions along the road section. For example, the weather conditions may comprise a temperature, a wind speed or wind direction, and a precipitation. The traffic conditions may indicate a current average speed along the road section or if there is a traffic jam. The energy consumption of the vehicle required for driving along the road section may be determined based on the determined environmental conditions.

According to an embodiment, the at least one energy consumption of the at least one other vehicle is retrieved from a server. While the vehicle is driving along the road section, the energy consumed by the vehicle is measured and the measured energy consumption of the vehicle is provided to the server. Thus, the vehicle can provide energy consumption information to the server which may be provided by the server to other vehicles driving along the same road section.

In other words, all electric vehicles or at least a large number of electric vehicles report to the server how much energy they use for each road section or stretch they were driving along. This information is compiled in a central location and aggregated together with relevant information concerning this specific vehicle, for example type, weight, current temperature and required temperature, and the driver, for example a more energy-conserving driver or a more sporty driver. Based on this information an accurate prediction can be made for a vehicle driving along the road section. Furthermore, the server may provide self-learning predictions taking into account for example historical data, for example historical weather information or time of the day based traffic information.

According to another embodiment, a method for a vehicle comprises determining road sections of a planned route along which a driver of the vehicle is planning to drive. Furthermore, for each road section at least one energy consumption of at least one other vehicle driving along the road section is measured, and the energy consumption of the vehicle required for driving along the road section is predicted based on the at least one energy consumption of the other vehicles. Furthermore, a current energy available in the vehicle is determined and a remaining driving range is calculated based on the current available energy and the predicted energy consumptions for the route sections of the planned route.

If the driver of the vehicle has the route guidance active or if the vehicle uses a predictive navigation, the vehicle may report the route or destination to the server together with a current state of charge of the battery of the vehicle. The server may calculate the remaining driving range based on these parameters and the energy which has been used on the sub-sections of the route by other electrical vehicles in the past. The energy which has been used by the other vehicles in the past considers for example how much recuperation is possible on the route section and how much real braking is needed when going downhill. Furthermore, the driving range is based on the weather and temperature profile along the route and on how the driver usually uses the heating system and air conditioning system of the vehicle to compensate. Furthermore, the driving range may be predicted based on traffic information indicating if there is a traffic jam or if the user can go full speed. Furthermore, driver characteristics may be used to predict the remaining driving range, for example the top speed the driver usually goes or the driving style of the driver, for example if the driver accelerates rapidly or more moderately. The resulting remaining predicted driving range is sent back from the server to the vehicle and displayed to the driver.

The server may comprise a single server or a group of servers arranged in a network, in a so-called cloud. From the point of view of the vehicle, the architecture of the cloud is not relevant. However, a cloud-based architecture may provide a higher reliability for predicting the energy consumption or for calculating the remaining driving range.

According to another embodiment, a vehicle comprising a processing unit and a transmission unit is provided. The transmission unit allows the processing unit to communicate with a server outside the vehicle, for example a server in a so-called cloud network. In operation, the processing unit may retrieve a predicted energy consumption required for driving along a road section from the server. The predicted energy consumption is predicted by the server based on at least one energy consumption which has been measured by at least one other vehicle driving along the road section.

According to an embodiment, the processing unit determines furthermore a current state of operation of the vehicle and transmits the current state of operation to the server for predicting the energy consumption of the vehicle along the road section based on the determined current state of operation. Additionally, or as an alternative, the processing unit itself may predict the energy consumption of the vehicle for driving along the road section based on the determined current state of operation.

According to a further embodiment, the processing unit measures the energy consumption of the vehicle while the vehicle is driving along the road section. The measured energy consumption of the vehicle is then provided by the processing unit to the server.

Furthermore, the processing unit may determine road sections of a planned route along which a driver of the vehicle is planning to drive. For each road section the processing unit may retrieve from the server a predicted energy consumption required for driving along the corresponding road section. Furthermore, the processing unit may determine a current energy available in the vehicle and may calculate a remaining driving range of the vehicle based on the current available energy and the predicted energy consumptions for the route sections of the planned route.

According to yet another embodiment, a server comprises a transmission unit to communicate with at least one first vehicle and a second vehicle, and a processing unit. The processing unit may receive from the at least one first vehicle at least one measured energy consumption indicating an energy consumed by the first vehicle driving along a road section. Furthermore, the processing unit may predict an energy consumption of the second vehicle required for driving along the road section based on the at least one measured energy consumption from the first vehicles. The processing unit may provide the predicted energy consumption to the second vehicle.

According to an embodiment, the processing unit of the server may furthermore receive a current state of operation of the second vehicle from the second vehicle and may predict the energy consumption of the second vehicle required for driving along the road section additionally based on the received current state of operation.

According to another embodiment, the processing unit of the server may determine a road section information associated with structural properties of the road section, for example if the road section is a road in a city or a road of a highway, or if the road section is a winding road through mountains or along a coast, and so on. Based on the determined road section information, the processing unit may predict the energy consumption of the second vehicle required for driving along the road section.

Additionally, the processing unit of the server may determine environmental conditions along the road section which are associated with for example weather conditions or traffic conditions along the road section. Based on the determined environmental conditions the processing unit may predict the energy consumption of the second vehicle required for driving along the road section. The predicted energy consumption may be transmitted by the processing unit via the transmission unit to the second vehicle.

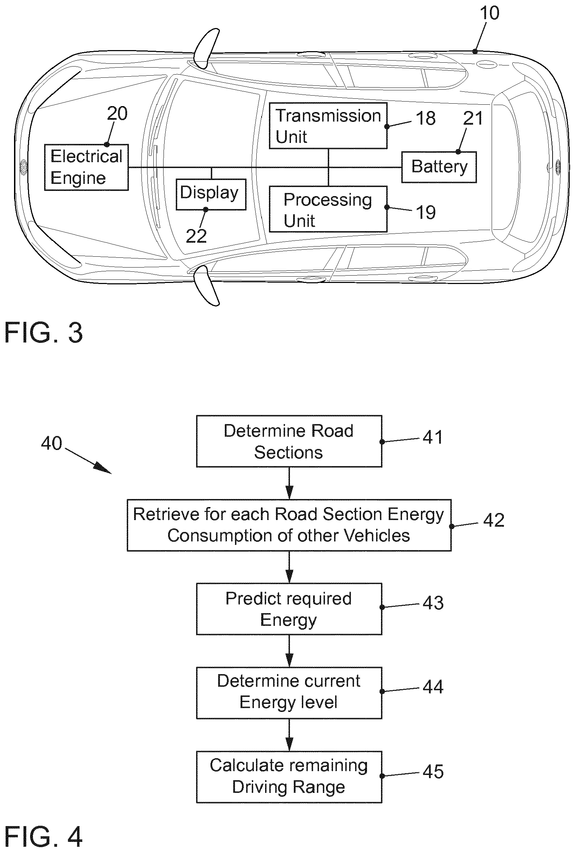

Fig. 2 shows a communication structure between a vehicle 10 and a server 11 according to an embodiment. The server 11 comprises a transmission unit 12 and a processing unit 13. As shown in Fig. 3 in more detail, the vehicle 10 comprises a transmission unit 18 and a processing unit 19. The vehicle 10 is an electrical vehicle comprising an electrical engine 20 for propelling the vehicle 10 and a battery 21 for supplying electrical energy to the electrical engine 20. The vehicle 10 comprises furthermore a display 22 indicating a remaining driving range for the vehicle to the user of the vehicle.

The server 11 is coupled to a data base 14 for storing information about the vehicle 10 and the driver. In the data base 14, for example a driver characteristic of the driver driving the vehicle 10 may be stored. The driver characteristics may comprise for example if a driving style of the driver is more sporty or more energy-conserving. Furthermore, the driver characteristics may comprise information about a top speed the driver usually goes or a preferred cabin temperature of the driver. The information about the vehicle may comprise for example a weight of the vehicle and information about an aerodynamic resistance of the vehicle. The server 11 is furthermore coupled to a server 15 providing road network data. The road network data may comprise for example information about an elevation or slope of a road, or a kind of road, for example if the road is in an urban environment inside a city, or if it is part of a highway. The server 11 is furthermore coupled to a traffic information server 16 and a weather information server 17. The traffic information server 16 may provide information about congestions or traffic jams and a current average speed on specific road sections. The weather information server 17 may provide weather information like temperature, precipitation, wind speed and sun intensity along road sections. The server 11, the data base 14 and the server 15 for the road network data may be operated by a vehicle provider whereas the traffic information server 16 and the weather information server 17 may be operated by a separate content provider. However, this is just an exemplary segmentation and any other kind of segmentation may be implemented. Especially, the servers 11 and 15-17 may constitute a so-called data information cloud.

Operation of the vehicle 10 and the server 11 will now be described in connection with the method 40 shown in Fig. 4 in more detail. If a driver of the vehicle 10 has activated the route guidance for guiding the vehicle to a destination or if the vehicle uses a predictive navigation, the processing unit 19 of the vehicle 10 determines in step 41 road sections of the route to the destination. The processing unit 19 transmits the determined road sections via the transmission unit 18 to the server 11. The processing unit 13 of the server 11 receives the road sections via the transmission unit 12. As an alternative, the processing unit 19 of the vehicle may transmit the destination to the server 11 and the processing unit 13 of the server 11 may determine the road sections to the destination.

The processing unit 13 of the server 11 retrieves in step 42 for each road section an amount of energy which has been consumed by other vehicles which have driven along this road section in the past. In step 43, the processing unit 13 predicts a required energy for the vehicle 10 to drive along each of the road sections. For predicting the required energy, the processing unit 13 may consider additional information from the data base 14, the traffic information server 16, the weather information server 17 and the road network data server 15. Thus, the processing unit 13 of the server 11 can make a very precise energy consumption prediction taking into account for example a weight of the vehicle 10, current wind conditions, and the speed the vehicle 10 will drive along the road section due to the current traffic situation along the road section. Furthermore, the processing unit 19 of the vehicle 10 may transmit to the processing unit 13 of the server 11 a current state of operation of the vehicle. The state of operation of the vehicle may comprise for example a required cabin temperature the driver has set and a current outside temperature. Based on this additional information the processing unit 13 predicts the required energy for cooling or heating the cabin of the vehicle 10 and can thus predict the required energy for driving along the road section. The required energy for driving along the road section is transmitted from the server 11 to the vehicle 10 and the processing unit 19 of the vehicle 10 determines in step 44 a current energy level of the battery 21. Based on the required energy for driving along the road sections of the planned route and the current energy level of the battery 21, the processing unit 19 calculates in step 45 a remaining driving range of the vehicle 10.

While exemplary embodiments have been described above, various modifications may be implemented in other embodiments. For example, additional states of operation of the vehicle may be considered for predicting the required energy in step 43. For example, an activation state of windshield wipers, headlamps or a music entertainment system of the vehicle may be considered for predicting the required energy. Finally, it is to be understood that all the embodiments described above are considered to be comprised by the present invention as it is defined by the appended claims.

## Claims

1. A method for a vehicle, comprising:
- measuring at least one energy consumption of at least one other vehicle driving along a road section, and
- predicting an energy consumption of the vehicle required for driving along the road section based on the at least one measured energy consumption of the at least one other vehicle.

2. The method according to claim 1, the method further comprising:
- determining a current state of operation of the vehicle,
wherein predicting the energy consumption of the vehicle comprises predicting the energy consumption of the vehicle required for driving along the road section based on the current state of operation.

3. The method according to claim 1, the method further comprising:
- determining a road section information associated with structural properties of the road section,
wherein predicting the energy consumption of the vehicle comprises predicting the energy consumption of the vehicle required for driving along the road section based on the determined road section information.

4. The method according to claim 1, the method further comprising:
- determining environmental conditions along the road section associated with at least one of current weather conditions and traffic conditions along the road section,
wherein predicting the energy consumption of the vehicle comprises predicting the energy consumption of the vehicle required for driving along the road section based on the determined environmental conditions.

5. The method according to claim 1, the method further comprising:
- retrieving the measured at least one energy consumption of the at least one other vehicle from a server,
- measuring the energy consumption of the vehicle while the vehicle is driving along the road section, and
- providing the measured energy consumption of the vehicle to the server.

6. The method according to claim 1, wherein the vehicle is an electric vehicle.

7. The method according to claim 1, comprising:
- determining road sections of a planned route along which a driver of the vehicle is planning to drive,
- for each road section:
measuring at least one energy consumption of at least one other vehicle driving along the road section, and
predicting the energy consumption of the vehicle required for driving along the road section based on the at least one measured energy consumption,
- determining a current energy available in the vehicle, and
- calculating a remaining driving range based on the current available energy and the predicted energy consumptions for the route sections of the planned route.

8. A vehicle, comprising:
- a transmission unit to communicate with a server outside the vehicle, and
- a processing unit to retrieve a predicted energy consumption required for driving along a road section from the server, wherein the predicted energy consumption of the vehicle is predicted based on at least one energy consumption measured by at least one other vehicle driving along the road section.

9. The vehicle according to claim 8, wherein the processing unit is furthermore to determine a current state of operation of the vehicle, and
to transmit the current state of operation to the server for predicting the energy consumption of the vehicle along the road section based on the determined current state of operation.

10. The vehicle according to claim 8, wherein the processing unit is furthermore to determine a current state of operation of the vehicle, and
to predict the energy consumption of the vehicle along the road section based on the determined current state of operation.

11. The vehicle according to claim 8, wherein the processing unit is furthermore to measure the energy consumption of the vehicle while the vehicle is driving along the road section, and
to provide the measured energy consumption of the vehicle to the server.

12. The vehicle according to claim 8, wherein the processing unit is furthermore to determine road sections of a planned route along which a driver of the vehicle is planning to drive,
to retrieve for each road section from the server a predicted energy consumption required for driving along the corresponding road section,
to determine a current energy available in the vehicle, and
to calculate a remaining driving range of the vehicle based on the current available energy and the predicted energy consumptions for the route sections of the planned route.

13. A server, comprising:
- a transmission unit to communicate with at least one first vehicle and a second vehicle, and
- a processing unit
to receive from the at least one first vehicle at least one measured energy consumption indicating an energy consumed by the first vehicle driving along a road section,
to predict an energy consumption of the second vehicle required for driving along the road section based on the at least one measured energy consumption, and
to provide the predicted energy consumption to the second vehicle.

14. The server according to claim 13, wherein the processing unit is furthermore
to receive a current state of operation of the second vehicle from the second vehicle, and
to predict the energy consumption of the second vehicle required for driving along the road section based on the received current state of operation.

15. The server according to claim 13, wherein the processing unit is furthermore
to determine a road section information associated with structural properties of the road section, and
to predict the energy consumption of the second vehicle required for driving along the road section based on the determined road section information.

16. The server according to claim 13, wherein the processing unit is furthermore
to determine environmental conditions along the road section associated with at least one of current weather conditions and traffic conditions along the road section, and
to predict the energy consumption of the second vehicle required for driving along the road section based on the determined environmental conditions.

## Patentansprüche

1. Verfahren für ein Fahrzeug, das Folgendes umfasst:
- Messen zumindest eines Energieverbrauchs von mindestens einem anderen Fahrzeug, das entlang eines Straßenabschnitts fährt, und
- Vorhersagen eines Energieverbrauchs des Fahrzeugs, der für das Fahren entlang des Straßenabschnitts erforderlich ist, basierend auf dem mindestens einen gemessenen Energieverbrauch des mindestens einen anderen Fahrzeugs.

2. Verfahren nach Anspruch 1, wobei das Verfahren ferner Folgendes umfasst:
- Bestimmen eines aktuellen Betriebszustands des Fahrzeugs,
wobei das Vorhersagen des Energieverbrauchs des Fahrzeugs das Vorhersagen des Energieverbrauchs des Fahrzeugs, der zum Fahren entlang des Straßenabschnitts erforderlich ist, basierend auf dem aktuellen Betriebszustand umfasst.

3. Verfahren nach Anspruch 1, wobei das Verfahren Folgendes umfasst:
- Bestimmen von Straßenabschnittsinformationen, die strukturellen Eigenschaften des Straßenabschnitts zugeordnet sind,
wobei das Vorhersagen des Energieverbrauchs des Fahrzeugs das Vorhersagen des Energieverbrauchs des Fahrzeugs, der für das Fahren entlang des Straßenabschnitts erforderlich ist, basierend auf den bestimmten Straßenabschnittinformationen umfasst.

4. Verfahren nach Anspruch 1, wobei das Verfahren ferner Folgendes umfasst:
- Bestimmen von Umgebungsbedingungen entlang des Straßenabschnitts, denen aktuelle Wetterbedingungen und/oder Verkehrsbedingungen entlang des Straßenabschnitts zugeordnet sind,
wobei das Vorhersagen des Energieverbrauchs des Fahrzeugs das Vorhersagen des Energieverbrauchs des Fahrzeugs, der für das Fahren entlang des Straßenabschnitts erforderlich ist, basierend auf den bestimmten Umgebungsbedingungen umfasst.

5. Verfahren nach Anspruch 1, wobei das Verfahren ferner Folgendes umfasst:
- Abrufen des gemessenen mindestens einen Energieverbrauchs des mindestens einen anderen Fahrzeugs von einem Server,
- Messen des Energieverbrauchs des Fahrzeugs, während das Fahrzeug entlang des Straßenabschnitts fährt, und
- Bereitstellen des gemessenen Energieverbrauchs des Fahrzeugs für den Server.

6. Verfahren nach Anspruch 1, wobei das Fahrzeug einem Elektrofahrzeug entspricht.

7. Verfahren nach Anspruch 1, das Folgendes umfasst:
- Bestimmen von Straßenabschnitten einer geplanten Route, an der ein Fahrer des Fahrzeugs plant entlang zu fahren,
- für jeden Straßenabschnitt:
Messen mindestens eines Energieverbrauchs von mindestens einem anderen Fahrzeug, das entlang des Straßenabschnitts fährt, und
Vorhersagen des Energieverbrauchs des Fahrzeugs, der für das Fahren entlang des Straßenabschnitts erforderlich ist, basierend auf dem mindestens einen gemessenen Energieverbrauch,
- Bestimmen einer Energie, die in dem Fahrzeug aktuell verfügbar ist, und
- Berechnen einer verbleibenden Fahreichweite basierend auf der aktuell verfügbaren Energie und des vorhergesagten Energieverbrauchs für die Routenabschnitte der geplanten Route.

8. Fahrzeug, das Folgendes umfasst:
- eine Übertragungseinheit, um mit einem Server außerhalb des Fahrzeugs zu kommunizieren, und
- eine Verarbeitungseinheit, um einen vorhergesagten Energieverbrauch, der für das Fahren entlang des Straßenabschnitts erforderlich ist, von dem Server abzurufen, wobei der vorhergesagte Energieverbrauch des Fahrzeugs basierend auf dem mindestens einen Energieverbrauch, der von dem mindestens einen anderen Fahrzeug gemessen wird, das entlang des Straßenabschnitts fährt, vorhergesagt wird.

9. Fahrzeug nach Anspruch 8, wobei die Verarbeitungseinheit ferner dafür ausgelegt ist,
einen aktuellen Betriebszustand des Fahrzeugs zu bestimmen, und
den aktuellen Betriebszustand zu dem Server zu übertragen, um den Energieverbrauch des Fahrzeugs entlang des Straßenabschnitts basierend auf dem bestimmten aktuellen Betriebszustand vorherzusagen.

10. Fahrzeug nach Anspruch 8, wobei die Verarbeitungseinheit ferner dafür ausgelegt ist,
einen aktuellen Betriebszustand des Fahrzeugs zu bestimmen, und
den Energieverbrauch des Fahrzeugs entlang des Straßenabschnitts basierend auf dem bestimmten aktuellen Betriebszustand vorherzusagen.

11. Fahrzeug nach Anspruch 8, wobei das Fahrzeug ferner dafür ausgelegt ist,
den Energieverbrauch des Fahrzeugs, während das Fahrzeug entlang des Straßenabschnitts fährt, zu messen, und
dem Server den gemessenen Energieverbrauch des Fahrzeugs bereitzustellen.

12. Fahrzeug nach Anspruch 8, wobei das Fahrzeug ferner dafür ausgelegt ist,
Straßenabschnitte einer geplanten Route, an der ein Fahrer des Fahrzeugs plant entlang zu fahren, zu bestimmen,
für jeden Straßenabschnitt von dem Server einen vorhergesagten Energieverbrauch, der für das Fahren entlang des entsprechenden Straßenabschnitts erforderlich ist, abzurufen,
eine in dem Fahrzeug aktuell verfügbare Energie zu bestimmen, und
einen verbleibenden Fahrbereich des Fahrzeugs basierend auf der aktuell verfügbaren Energie und dem vorhergesagten Energieverbrauch für die Routenabschnitte der geplanten Route zu berechnen.

13. Server, der Folgendes umfasst:
- eine Übertragungseinheit, um mit mindestens einem ersten Fahrzeug und einem zweiten Fahrzeug zu kommunizieren, und
- eine Verarbeitungseinheit, um
von dem mindestens einen ersten Fahrzeug mindestens einen gemessenen Energieverbrauch zu empfangen, der eine Energie anzeigt, die von dem ersten Fahrzeug, das entlang eines Straßenabschnitts fährt, verbraucht wird,
einen Energieverbrauch des zweiten Fahrzeugs vorherzusagen, der für das Fahren entlang des Straßenabschnitts erforderlich ist, basierend auf dem mindestens einen gemessenen Energieverbrauch, und
dem zweiten Fahrzeug den vorhergesagten Energieverbrauch bereitzustellen.

14. Server nach Anspruch 13, wobei die Verarbeitungseinheit ferner dafür ausgelegt ist,
einen aktuellen Betriebszustand des zweiten Fahrzeugs von dem zweiten Fahrzeug zu empfangen, und
den Energieverbrauch des zweiten Fahrzeugs, der für das Fahren entlang des Straßenabschnitts erforderlich ist, basierend auf dem empfangenen aktuellen Betriebszustand vorherzusagen.

15. Server nach Anspruch 13, wobei die Verarbeitungseinheit ferner dafür ausgelegt ist,
Straßenabschnittsinformationen, die den strukturellen Eigenschaften des Straßenabschnitts zugeordnet sind, zu bestimmen, und
den Energieverbrauch des zweiten Fahrzeugs, der für das Fahren entlang des Straßenabschnitts erforderlich ist, basierend auf den bestimmten Straßenabschnittsinformationen vorherzusagen.

16. Server nach Anspruch 13, wobei die Verarbeitungseinheit ferner dafür ausgelegt ist,
Umgebungsbedingungen entlang des Straßenabschnitts, die aktuellen Wetterbedingungen und/oder Verkehrsbedingungen entlang des Straßenabschnitts zugeordnet sind, zu bestimmen, und
den Energieverbrauch des zweiten Fahrzeugs, der für das Fahren entlang des Straßenabschnitts erforderlich ist, basierend auf den bestimmten Umgebungsbedingungen vorherzusagen.

## Revendications

1. Procédé pour un véhicule, comprenant :
- la mesure d'au moins une consommation d'énergie d'au moins un autre véhicule roulant le long d'une section de route, et
- la prédiction d'une consommation d'énergie du véhicule nécessaire pour rouler le long de la section de route sur la base de l'au moins une consommation d'énergie mesurée de l'au moins un autre véhicule.

2. Procédé selon la revendication 1, le procédé comprenant en outre :
- la détermination d'un état de fonctionnement en cours du véhicule,
dans lequel la prédiction de la consommation d'énergie du véhicule comprend la prédiction de la consommation d'énergie du véhicule nécessaire pour rouler le long de la section de route sur la base de l'état de fonctionnement en cours.

3. Procédé selon la revendication 1, le procédé comprenant en outre :
- la détermination d'informations sur la section de route associées à des propriétés structurales de la section de route,
dans lequel la prédiction de la consommation d'énergie du véhicule comprend la prédiction de la consommation d'énergie du véhicule nécessaire pour rouler le long de la section de route sur la base des informations sur la section de route déterminées.

4. Procédé selon la revendication 1, le procédé comprenant en outre :
- la détermination de conditions environnementales le long de la section de route associées à des conditions météorologiques en cours et/ou des conditions de trafic le long de la section de route, dans lequel la prédiction de la consommation d'énergie du véhicule comprend la prédiction de la consommation d'énergie du véhicule nécessaire pour rouler le long de la section de route sur la base des conditions environnementales déterminées.

5. Procédé selon la revendication 1, le procédé comprenant en outre :
- la récupération de l'au moins une consommation d'énergie mesurée de l'au moins un autre véhicule à partir d'un serveur,
- la mesure de la consommation d'énergie du véhicule pendant que le véhicule roule le long de la section de route, et
- la fourniture de la consommation d'énergie mesurée du véhicule au serveur.

6. Procédé selon la revendication 1, dans lequel le véhicule est un véhicule électrique.

7. Procédé selon la revendication 1, comprenant :
- la détermination de sections de route d'un itinéraire planifié le long desquelles un conducteur du véhicule est censé rouler,
- pour chaque section de route :
la mesure d'au moins une consommation d'énergie d'au moins un autre véhicule roulant le long de la section de route, et
la prédiction de la consommation d'énergie du véhicule nécessaire pour rouler le long de la section de route sur la base de l'au moins une consommation d'énergie mesurée,
- la détermination d'une énergie disponible en cours dans le véhicule, et
- le calcul d'une plage de conduite restante sur la base de l'énergie disponible en cours et des consommations d'énergie prédites pour les sections de route de l'itinéraire planifié.

8. Véhicule, comprenant :
- une unité de transmission pour communiquer avec un serveur à l'extérieur du véhicule, et
- une unité de traitement pour récupérer une consommation d'énergie prédite nécessaire pour rouler le long d'une section de route à partir du serveur, la consommation d'énergie prédite du véhicule étant prédite sur la base d'au moins une consommation d'énergie mesurée par au moins un autre véhicule roulant le long de la section de route.

9. Véhicule selon la revendication 8, dans lequel l'unité de traitement sert en outre
à déterminer un état de fonctionnement en cours du véhicule, et
à transmettre l'état de fonctionnement en cours au serveur pour prédire la consommation d'énergie du véhicule le long de la section de route sur la base de l'état de fonctionnement en cours déterminé.

10. Véhicule selon la revendication 8, dans lequel l'unité de traitement sert en outre
à déterminer un état de fonctionnement en cours du véhicule, et
à prédire la consommation d'énergie du véhicule le long de la section de route sur la base de l'état de fonctionnement en cours déterminé.

11. Véhicule selon la revendication 8, dans lequel l'unité de traitement sert en outre
à mesurer la consommation d'énergie du véhicule pendant que le véhicule roule le long de la section de route, et
à fournir la consommation d'énergie mesurée du véhicule au serveur.

12. Véhicule selon la revendication 8, dans lequel l'unité de traitement sert en outre
à déterminer des sections de route d'un itinéraire planifié le long desquelles un conducteur du véhicule est censé rouler,
à récupérer pour chaque section de route à partir du serveur une consommation d'énergie prédite nécessaire pour rouler le long de la section de route correspondante,
à déterminer une énergie disponible en cours dans le véhicule, et
à calculer une plage de conduite restante du véhicule sur la base de l'énergie disponible en cours et des consommations d'énergie prédites pour les sections de route de l'itinéraire planifié.

13. Serveur, comprenant :
- une unité de transmission pour communiquer avec au moins un premier véhicule et un deuxième véhicule, et
- une unité de traitement
pour recevoir depuis l'au moins un premier véhicule au moins une consommation d'énergie mesurée représentative d'une énergie consommée par le premier véhicule roulant le long d'une section de route,
pour prédire une consommation d'énergie du deuxième véhicule nécessaire pour rouler le long de la section de route sur la base de l'au moins une consommation d'énergie mesurée, et
pour fournir la consommation d'énergie prédite au deuxième véhicule.

14. Serveur selon la revendication 13, dans lequel l'unité de traitement sert en outre
à recevoir un état de fonctionnement en cours du deuxième véhicule depuis le deuxième véhicule, et
à prédire la consommation d'énergie du deuxième véhicule nécessaire pour rouler le long de la section de route sur la base de l'état de fonctionnement en cours reçu.

15. Serveur selon la revendication 13, dans lequel l'unité de traitement sert en outre
à déterminer des informations sur la section de route associées à des propriétés structurales de la section de route, et
à prédire la consommation d'énergie du deuxième véhicule nécessaire pour rouler le long de la section de route sur la base des informations sur la section de route déterminées.

16. Serveur selon la revendication 13, dans lequel l'unité de traitement sert en outre
à déterminer des conditions environnementales le long de la section de route associées à des conditions météorologiques en cours et/ou des conditions de trafic le long de la section de route, et
à prédire la consommation d'énergie du deuxième véhicule nécessaire pour rouler le long de la section de route sur la base des conditions environnementales déterminées.
